# EUROPÄISCHE PATENTANMELDUNG

(11) **EP 2 199 075 A1**
(43) Veröffentlichungstag der Anmeldung: **23.06.2010**
(21) Anmeldenummer: 09174026.6
(22) Anmeldetag: 26.10.2009
(51) Int. Cl.: B32B 17/10, C03C 27/12, E06B 3/54

(54) **Integrierter Glasaufbau, Verfahren zu seiner Herstellung und seine Verwendung**

(30) Priorität: 20.12.2008 DE 102008064356
(71) Anmelder: Saint-Gobain Glass France, 92400 Courbevoie (FR)
(72) Erfinder: Hermens, Ulrich, 52078, Aachen (DE); Schreiber, Walter, 52074, Aachen (DE)
(74) Vertreter: Lendvai, Tomas

(57) **Zusammenfassung**

Integrierter Glasaufbau, umfassend
A) eine bei der Belastung durch eine ständige Flächenpressung formstabile Verbundglasscheibe, enthaltend
a1) eine erste Glasscheibe,
a2) eine Schicht aus einem partiell neutralisierten Ionomerharz, das Ethylen und/oder Propylen und mindestens eine alpha,beta-ungesättigte Carbonsäure mit 3 bis 8 Kohlenstoffatomen im Molekül einpolymerisiert enthält, und
a3) eine zweite Glasscheibe, sowie

B) mindestens eine Klemmvorrichtung, die von außen auf die Verbundglasscheibe A) beidseitig eine ständige Flächenpressung ausübt und die Verbundglasscheibe A) alleine durch die ständige Flächenpressung fixiert.

Verfahren zu seiner Herstellung und seine Verwendung.

## Beschreibung

Die vorliegende Erfindung betrifft einen neuen integrierten Glasaufbau, umfassend ein Verbundglas und mindestens eine Klemmvorrichtung.

Außerdem betrifft die vorliegende Erfindung ein neues Verfahren zur Herstellung eines integrierten Glasaufbaus.

Nicht zuletzt betrifft die vorliegende Erfindung die Verwendung des neuen integrierten Glasaufbaus und des mithilfe des neuen Verfahrens hergestellten Glasaufbaus.

Aus dem Stand der Technik sind Glasaufbauten mit Sicherheitsgläsern bekannt. Diese enthalten im wesentlichen ESG (Einscheibensicherheitsglas) oder VG (Verbundglas) und VSG (Verbundsicherheitsglas). Dabei wird ESG durch ein bestimmtes Verfahren, bei dem das Glas vorgespannt wird, hergestellt. Bei VG bzw. VSG wird eine besondere Stabilität dadurch erzielt, dass zwischen zwei Glasschichten organische Zwischenschichten, insbesondere Folien, vorhanden sind, die die Verbundstruktur stabilisieren.

Solche Glasaufbauten werden vielfältig verwendet, beispielsweise für absturzsichernde, einbruchshemmende oder hurricanesichere Fenster und Gebäudeverglasungen.

Dabei werden die Verbundsysteme bevorzugt verwendet, da diese auch nach Beschädigung noch einen gewisse Resttragfähigkeit zeigen, wohingegen ESG oberhalb einer gewissen Belastungsgrenze in viele kleine Bruchstücke zerfällt.

Übliche und bekannte Verbundaufbauten erreichen ihre Funktion mittels Kombination von Folien aus Polyvinylbutyral (PVB) oder Polyurethan (PU), Ethylvinylacetat (EVA) oder Polycarbonat (PC) und Glas.

Illustrative Beispiele für den bisherigen Stand der Technik sind EP 0 748 687 A2, US 5,778,629, US 6,101,783, US 5,960,606 und US 6,675,550 B1. Die darin beschriebenen, üblichen und bekannten Verglasungen sind jedoch nicht klemmbar, sondern müssen über andere Haltemechanismen befestigt werden, wie zum Beispiel durch Rahmung und Verklebung.

Aus der internationalen Patentanmeldung WO 2006/034346 A1 sind schalldämmende Verbundglasscheiben bekannt, die zwischen den Glasscheiben ein Folienlaminat enthalten. Das Folienlaminat kann beispielsweise aus einer lonomerfolie wie SentryGlas Plus® der Firma DuPont, einer Polyethylenterephthalatfolie und einer Polyvinylbutyralfolie (PVB-Folie) bestehen. Es ist nicht bekannt, ob diese schalldämmenden Verbundglasscheiben mithilfe von Klemmvorrichtungen sicher befestigt werden können.

Aus der internationalen Patentanmeldung WO 2005/042246 A1 sind Infrarotstrahlung blockierende Verbundglasscheiben bekannt, die zwischen den Glasscheiben ein Folienlaminat enthalten. Das Folienlaminat kann beispielsweise aus einer mehrschichtigen, Infrarotstrahlung reflektierenden Folie, die beidseitig von lonomerfolien wie Sentry Glas Plus® der Firma DuPont bedeckt ist, bestehen. Es ist ebenfalls nicht bekannt, ob diese Infrarotstrahlung blockierenden Verbundglasscheiben mithilfe von Klemmvorrichtungen sicher befestigt werden können.

Aus der internationalen Patentanmeldung WO 2004/048736 A1 sind Verbundglasscheiben bekannt, die sich für die Herstellung von statisch und/oder dynamisch belasteten Glaskonstruktionen, wie Überkopfverglasungen für Dächer, Glaswände, Fassaden oder Ganzglastüren, eignen. Diese Verbundglasscheiben enthalten PVB-Folien. Sie werden mittels Klemm- und Punktbefestigungen montiert, deren klemmenden Teile oder Klemmbacken durch Gewinde miteinander verbunden sind, die durch Bohrungen in der Verbundglasscheibe hindurchgeführt werden. Eine Halterung alleine durch Flächenpressung ist nicht möglich. Die Verbundglasscheiben sind über eine Gießharzschicht, worin Leiterbahnen eingebettet sind, mit einer weiteren Glasscheibe verbunden. Die Klemmvorrichtungen sind derart gestaltet, dass sie nur Druck auf die Verbundglasscheiben ausüben. Diese bekannten integrierten Glasaufbauten sind aber nicht in ausreichendem Maße einbruchshemmend.

Ein generelles Problem der üblichen und bekannten Verglasungen auf der Basis von Verbundsicherheitsglas ist, dass durch den Druck, der von der Klemmvorrichtung auf die Verglasung ausgeübt wird, ein Kaltfließen der Zwischenschicht oder Folie einsetzt was zu einer Verringerung der Schichtdicke der Verglasungen führt, die bewirkt, dass das Glas nicht mehr länger fest eingeklemmt ist, sondern nur noch locker in den Klemmvorrichtungen sitzt. Dies ist aber aus sicherheitstechnischen Gründen nicht akzeptabel.

Dieser Effekt bewirkt beispielsweise bei Ganzglastüren ein allmähliches Abrutschen der Scheibe, was letztlich zu einem Verklemmen der Tür führt. Die Tür ist dann nicht mehr funktionsfähig. Dieses nachteilige Verhalten kann durch höhere Temperaturen, wie sie an heißen Sommertagen herrschen, noch beschleunigt werden. Dieser Effekt wird insbesondere dann kritisch, wenn Personen, die sich in einem Raum mit einer solchen verklemmten Tür befinden, den Raum auch im Notfall nicht mehr verlassen können.

Um diese Probleme zu umgehen, müssen die Hersteller von Ganzglastüren auf der Basis von Verbundsicherheitsglasscheiben wieder auf Haltevorrichtungen zurückgreifen, die Durchbohrungen erfordern. Die Herstellung solcher Durchbohrungen ist aber technisch aufwändig, weil besonders enge Toleranzen eingehalten werden müssten. Außerdem müssen die Beschlaghersteller größere und aufwändigere Beschläge bereitstellen. Somit sind solche Ganzglastüren auf der Basis von Verbundsicherheitsglasscheiben insgesamt unwirtschaftlich.

Zwar könnte man diese Probleme durch die Verwendung von Einscheibensicherheitsglas in gewissem Umfang beheben, indes können Ganzglastüren auf der Basis von Einscheibensicherheitsglas die Anforderungen von Versicherungen an die Einbruchshemmung nicht erfüllen, da solche Ganzglastüren oberhalb einer gewissen Belastungsgrenze in viele kleine Bruchstücke zerfallen.

Aufgabe der vorliegenden Erfindung war es demgemäß, einen neuen integrierten Glasaufbau zur Verfügung zu stellen, der einbruchshemmend sein soll, wobei es möglich sein soll, das Verbundglas durch Klemmvorrichtungen zu befestigen, die keine Bohrungen durch die Verbundglasscheibe mehr benötigen, sondern die die Verbundglasscheibe alleine durch Flächenpressung halten.

Die betreffenden Klemmvorrichtungen sollen weniger aufwändig sein, als die Haltevorrichtungen, die für Glasaufbauten mit Durchbohrungen notwendig sind.

Der neue integrierte Glasaufbau soll sich insbesondere für die Herstellung von stabilen, einbruchshemmenden, statisch und/oder dynamisch belasteten Glaskonstruktionen, insbesondere von Überkopfverglasungen für Dächer, Glaswänden, Fassaden oder Ganzglastüren, speziell einbruchshemmenden Ganzglastüren, eignen.

Die Scheiben der neuen einbruchshemmenden Ganzglastüren sollen auch bei höheren Temperaturen nicht abrutschen, so dass ein Verklemmen der Ganzglastüren vermieden wird.

Nicht zuletzt sollen die neuen einbruchshemmenden Ganzglastüren die Anforderungen von Versicherungen an die Einbruchshemmung erfüllen.

Demgemäß wurde ein neuer integrierter Glasaufbau gefunden, umfassend
A) eine bei der Belastung durch eine ständige Flächenpressung formstabile Verbundglasscheibe, enthaltend
   a1) eine erste Glasscheibe,
   a2) eine Schicht aus einem partiell neutralisierten lonomerharz, das Ethylen und/oder Propylen und mindestens eine alpha,beta-ungesättigte Carbonsäure mit 3 bis 8 Kohlenstoffatomen im Molekül einpolymerisiert enthält, und
   a3) eine zweite Glasscheibe, sowie
B) mindestens eine Klemmvorrichtung, die von außen auf die Verbundglasscheibe A) beidseitig eine ständige Flächenpressung ausübt und die Verbundglasscheibe A) alleine durch die ständige Flächenpressung fixiert.

Im Folgenden wird der neue integrierte Glasaufbau als »erfindungsgemäßer Glasaufbau« bezeichnet.

Außerdem wurde das neue Verfahren zur Herstellung eines integrierten Glasaufbaus gefunden, bei dem man
(1) eine erste Glasscheibe a1), eine Schicht a2) aus einem partiell neutralisierten lonomerharz, das Ethylen und/oder Propylen und mindestens eine alpha,beta-ungesättigte Carbonsäure mit 3 bis 8 Kohlenstoffatomen im Molekül einpolymerisiert enthält, und eine zweite Glasscheibe a3) laminiert, so dass eine unter den Bedingungen der Flächenpressung formstabile Verbundglasscheibe A) resultiert, wonach
(2) die Verbundglasscheibe A) mit mindestens einer Klemmvorrichtung B) derart verbunden wird, dass die Verbundglasscheibe A) von der mindestens einen Klemmvorrichtung B) alleine durch eine ständige Flächenpressung gehalten wird.

Im Folgenden wird das neue Verfahren zur Herstellung eines integrierten Glasaufbaus als »erfindungsgemäßes Verfahren« bezeichnet.

Nicht zuletzt wurde die neue Verwendung des erfindungsgemäßen Glasaufbaus und des mithilfe des erfindungsgemäßen Verfahrens hergestellten Glasaufbaus für die Herstellung von statisch und/oder dynamisch belasteten Glaskonstruktionen, gefunden, was im Folgenden als »erfindungsgemäße Verwendung« bezeichnet wird.

Es war überraschend, dass der erfindungsgemäße Glasaufbau einbruchshemmend war.

Außerdem überraschte, dass der erfindungsgemäße Glasaufbau es ermöglichte, das Verbundglas alleine durch Klemmvorrichtungen zu befestigen, die keine Bohrungen durch die Verbundglasscheiben mehr benötigten, sondern die die Verbundglasscheiben alleine durch Flächenpressung hielten. Dabei waren die betreffenden Klemmvorrichtungen weniger aufwändig, als die Haltevorrichtungen, die für Glasaufbauten mit Durchbohrungen notwendig waren, was ein weiterer Vorteil darstellte.

Der erfindungsgemäße Glasaufbau eignete sich insbesondere hervorragen für die Herstellung von stabilen, einbruchshemmenden, statisch und/oder dynamisch belasteten Glaskonstruktionen, insbesondere von Überkopfverglasungen für Dächer, Glaswänden, Fassaden oder Ganzglastüren, speziell einbruchshemmenden Ganzglastüren.

Die Scheiben der erfindungsgemäßen einbruchshemmenden Ganzglastüren rutschten auch bei höheren Temperaturen nicht ab, so dass ein Verklemmen der Ganzglastüren vermieden werden konnte.

Nicht zuletzt erfüllten die erfindungsgemäßen einbruchshemmenden Ganzglastüren die Anforderungen von Versicherungen an die Einbruchshemmung.

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Zimmertemperatur" eine Temperatur von 23°C. Temperaturangaben sind, soweit nicht anders angegeben, in Grad Celsius (°C).

Sofern nichts anderes angegeben, werden die angeführten Reaktionen bzw. Verfahrensschritte bei Normaldruck (Atmosphärendruck) durchgeführt.

Der Ausdruck (Meth)Acryl soll im Rahmen der vorliegenden Erfindung sowohl Methacryl als auch Acryl bzw. Mischungen beider umfassen.

Der erste wesentliche Bestandteil des erfindungsgemäßen Glasaufbaus ist die Verbundglasscheibe A).

Die Verbundglasscheibe A) ist unter den Bedingungen der Flächenpressung formstabil. Dies bedeutet, dass sie bei einer beidseitigen, längere Zeit andauernden ständigen Druckbelastung oder Flächenpressung durch eine Klemmvorrichtung B) nach der Entlastung keine oder nur eine sehr geringe Verringerung ihrer Dicke gegenüber der Dicke vor der Belastung aufweist. Vorzugsweise zeigte sie nach einer ständigen Flächenpressung von 4,5 MPa während 72 Stunden und anschließender Entlastung an der belasteten Stelle eine Verringerung der Dicke <0,5%, bevorzugt <0,4%, besonders bevorzugt <0,3% und insbesondere <0,2% der ursprünglichen Dicke vor der Belastung.

Die Verbundglasscheibe A) enthält die Glasscheiben a1) und a3).

Als Glasscheiben a1) und a3) kommen alle Gläser in Betracht, wie sie üblicherweise für die Herstellung von Verbundgläsern, insbesondere von Verbundsicherheitsgläsern, verwendet werden. Vorzugsweise werden Floatglas und vorgespanntes und teilvorgespanntes Floatglas verwendet.

Floatglas ist ein Flachglas, das mittels des Floatglasverfahrens hergestellt wird. Sowohl Verfahren zur Herstellung des Floatglases als auch die genaue Bedeutung dieses Begriffes sind dem Fachmann bekannt und müssen hier nicht weiter ausgeführt werden. Teilvorgespanntes und vorgespanntes Floatglas dienen üblicherweise der Herstellung von Einscheibensicherheitsglas. Insbesondere werden Alkali-Kalk-Hartglas oder Kalk-Natronglas nach DIN EN 572-1 verwendet. Weitere Beispiele geeigneter Gläser werden in Römpp-Online 2008 unter den Stichworten »Glas«, »Hartglas« oder »Sicherheitsglas« beschrieben oder sind aus der deutschen Übersetzung des europäischen Patent EP 0 847 965 B1 mit dem Aktenzeichen DE 697 31 2 168 T2, Seite 8, Absatz [0053], bekannt.

Im Rahmen der vorliegenden Erfindung sind beliebige Glasstärken einsetzbar, bevorzugt werden aber die Standardstärken 2, 3, 4, 5, 6, 8, 10, 12, 15, 19 und 25 mm verwendet. Dabei können die beiden Glasschichten gleiche oder unterschiedliche Stärken oder Dicken, vorzugsweise die gleiche Dicke, aufweisen.

Die Verbundglasscheibe A) enthält außerdem eine Schicht a2), insbesondere eine Folie a2), aus einem partiell neutralisierten lonomerharz, das Ethylen und/oder Propylen, insbesondere Ethylen, und mindestens eine alpha,beta-ungesättigte Carbonsäure mit 3 bis 8 Kohlenstoffatomen im Molekül einpolymerisiert enthält.

Der Neutralisationsgrad des lonomerharzes kann breit variieren. Vorzugsweise liegt er bei 10 bis 90 Mol-%, bevorzugt 15 bis 45 Mol-% und insbesondere 20 bis 35 Mol-% der vorhandenen Carboxylgruppen.

Als Neutralisationsmittel können alle üblichen und bekannten organischen und anorganischen Basen verwendet werden, solange das resultierende lonomerharz dimensionsstabil ist. Vorzugsweise werden anorganische Basen, bevorzugt Alkali- und Erdalkalihydroxide, besonders bevorzugt Alkalihydroxyde, ganz besonders bevorzugt Natrium- und Kaliumhydroxid und insbesondere Natriumhydroxid verwendet.

Beispiele geeigneter alpha,beta-ungesättigter Carbonsäuren sind (Meth)Acrylsäure und Ethacrylsäure, insbesondere Methacrylsäure.

Somit handelt es sich bei dem ganz besonders bevorzugt verwendeten lonomerharz um das wasserlösliche Natriumsalz eines Copolymerisats von Ethylen und Methacrylsäure.

Das Verhältnis der einpolymerisierten Comonomeren kann breit variieren und so hervorragend den Erfordernissen des Einzelfalls angepasst werden. Vorzugsweise enthalten die lonomerharze, jeweils bezogen auf ihre Gesamtmenge, 20 bis 30 Gew.-% an einpolymerisierten alpha,beta-ungesättigten Carbonsäuren.

Die Schicht oder die Folie a2) ist formstabil. Dies bedeutet, dass sie bei einer längeren Zeit andauernden Flächenpressung weder zum Kriechen noch zum kaltem Fließen neigt und auch keine sonstigen Relaxationserscheinungen zeigt.

Die Schicht oder Folie a2) kann eine Dicke von 0,2 bis 15 mm aufweisen. Bevorzugt sind Dicken von 0,3 bis 3 mm, insbesondere von 1 bis 2 mm.

Beispiele solcher Schichten und Folien a2) sind aus den internationalen Patentanmeldungen WO 2005/042246 A1, WO 2006/034346 A1 und WO 2007/149082 A1 bekannt. Sie werden beispielsweise von der Firma DuPont unter der Marke SentryGlas Plus® vertrieben.

Vorzugsweise weist die erfindungsgemäß zu verwendende Verbundglasscheibe A) keine Vertiefungen, Kanteneinbuchtungen und/oder Durchführungen oder Bohrungen zur Aufnahme von Klemmvorrichtungen auf.

Der weitere wesentliche Bestandteil des erfindungsgemäßen Glasaufbaus ist mindestens eine Klemmvorrichtung B).

Die Klemmvorrichtungen B) üben auf die Verbundglasscheiben A) eine ständige Flächenpressung aus, die ausreicht, um die Verbundglasscheiben A) auf Dauer, d. h. während mehrerer Jahre, vorzugsweise während der gesamten Gebrauchsdauer der erfindungsgemäßen Glasaufbauten, sicher zu befestigen.

Im Rahmen der vorliegenden Erfindung geeignete Klemmvorrichtungen B) sind übliche und bekannte Klemmbeschläge oder Klemmbefestigungen, wie sie für die Befestigung von Glasscheiben, insbesondere von Einscheibensicherheitsglasscheiben (ESG), in Glastüranlagen verwendet werden. Solche Klemmvorrichtungen B) werden beispielsweise von der Firma Dorma hergestellt und vertrieben.

Der erfindungsgemäße Glasaufbau kann mithilfe üblicher und bekannter Verfahren hergestellt werden. Erfindungsgemäß ist es von Vorteil, ihn mithilfe des erfindungsgemäßen Verfahrens herzustellen.

Bei dem erfindungsgemäßen Verfahren werden
(1) eine erste Glasscheibe a1), eine Schicht a2) aus einem partiell neutralisierten lonomerharz, das Ethylen und/oder Propylen und mindestens eine alpha,beta-ungesättigte Carbonsäure mit 3 bis 8 Kohlenstoffatomen im Molekül einpolymerisiert enthält, und eine zweite Glasscheibe a3) laminiert, so dass eine unter den Bedingungen der Flächenpressung formstabile Verbundglasscheibe A) resultiert, wonach
(2) die Verbundglasscheibe A) mit mindestens einer Klemmvorrichtung B) derart verbunden wird, dass die Verbundglasscheibe A) von der mindestens einen Klemmvorrichtung B) alleine durch eine ständige Flächenpressung gehalten wird.

Der Verfahrenschritt (1) wird in üblicher und bekannter Weise bei höherem Druck und bei erhöhter Temperatur durchgeführt. Bevorzugt erfolgt das Verbinden der Glasscheiben a1) und a3) mit der Schicht oder Folie a2) im Autoklaven, wobei dafür zu sorgen ist, dass gegebenenfalls zwischen den einzelnen Lagen eingeschlossene Luft entfernt wird. Nach dem Erkalten der resultierenden, erfindungsgemäß zu verwendenden Verbundglasscheibe A) werden gegebenenfalls überschüssige Folieteile a2) entfernt, wonach die Klemmvorrichtung(en) B) in üblicher und bekannter Weise angebracht wird oder werden.

Die erfindungsgemäßen Glasaufbauten werden im Rahmen der erfindungsgemäßen Verwendung mit besonderem Vorteil für die Herstellung von statisch und/oder dynamisch belasteten Glaskonstruktionen, vorzugsweise von Überkopfverglasungen für Dächer, Glaswänden, Fassaden oder Ganzglastüren, verwendet.

Bevorzugt werden sie für die Herstellung einbruchshemmender und/oder verzierender Verglasungen verwendet. Besonders bevorzugt ist die Verwendung als einbruchshemmende Verglasungen.

Ganz besondere Vorteile resultieren, wenn die erfindungsgemäßen Glasaufbauten für Fensterscheiben, Glastüren, Balustraden, Brüstungsverglasungen, Überkopfverglasungen, Glasdächer, Oberlichter oder begehbares Glas eingesetzt werden.

Insbesondere werden die erfindungsgemäßen Glasaufbauten für die Herstellung von neuartigen einbruchshemmenden Ganzglastüren eingesetzt.

Es ist möglich, die Verbundglasscheiben A) in den erfindungsgemäßen Glasaufbauten neben den Klemmvorrichtungen B) noch über andere übliche Mechanismen als die ständige Flächenpressung zu befestigen.

Höchst bevorzugt ist es, wenn die Verbundglasscheiben A) der erfindungsgemäßen Glasaufbauten gemäß vorliegender Erfindung nur über die Klemmvorrichtungen B) gehalten werden und keine weitere Haltemechanismen verwendet werden.

In einer Variante der vorliegenden Erfindung kann der Schichtaufbau der erfindungsgemäßen Glasaufbauten um weitere Schichten a2) und Glasscheiben a1) und/oder a3) erweitert werden. So ist es z.B. auch möglich, erfindungsgemäße Glasaufbauten des Aufbaus a1/a2/a3/a2/a3 oder a1/a2/a3/a2/a1/a2/a3 zu realisieren.

Die erfindungsgemäßen Glasaufbauten können noch weitere, andersartige Schichten a4) umfassen. So können z.B. Farb-Reflexionsfolien, UV- oder IR-Reflektionsfolien, Tönungsfolien, Wärmeschutz- oder -absorptionsfolien, elektrisch leitfähige Schichten, etc. Bestandteil des erfindungsgemäßen Glasaufbaus sein. Dabei können die Schichten a4) auf den Außenseiten und/oder im Innern der erfindungsgemäßen Glasaufbauten befinden.

Die erfindungsgemäßen Glasaufbauten der vorliegenden Erfindung sind dünner und leichter als konventionelle Glasaufbauten, bei denen Polyvinylbutyral als Zwischenschicht verwendet wird. Sie erlauben eine Klemmung unter Einhaltung der von den Beschlagherstellern geforderten Werte. Sie können geformt sein. Insbesondere können sie in eine oder mehrere Raumrichtungen gewölbt sein. Dabei können erfindungsgemäß sehr enge Krümmungsradien erreicht werden. Dies ist insbesondere für solche Anwendungen von Vorteil, wo eine gewisse gestalterische Ästhetik genutzt werden soll.

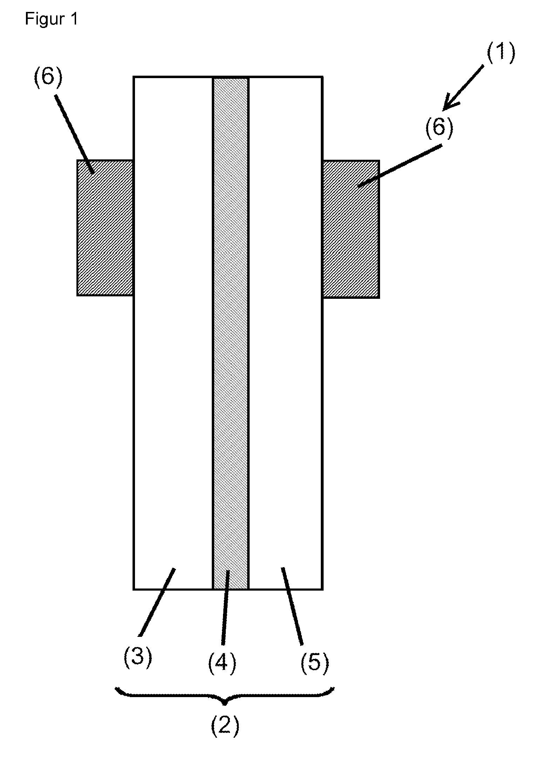

Der erfindungsgemäße Glasaufbau wird anhand der Figur 1 beispielhaft erläutert.

Die Figur 1 zeigt einen Querschnitt durch den erfindungsgemäßen Glasaufbau. Bei der Figur 1 handelt es sich um eine schematische Darstellung, die das Prinzip der Erfindung veranschaulichen soll. Die schematische Darstellung braucht daher nicht maßstabsgetreu zu sein. Die dargestellten Größenverhältnisse müssen daher auch nicht den bei der Ausübung der Erfindung in der Praxis angewandten Größenverhältnissen entsprechen.

In der Figur 1 haben die Bezugszeichen die folgende Bedeutung:
(1) integrierter Glasaufbau,
(2) Verbundsicherheitsglasscheibe,
(3) Floatglasscheibe,
(4) Schicht aus einem partiell neutralisierten lonomerharz,
(5) Floatglasscheibe und
(6) Klemmvorrichtung.

Die Floatglasscheiben (3) und (5) des integrierten Glasaufbaus (1) können unterschiedliche Dicken aufweisen. Vorzugsweise weisen sie die gleiche Dicke auf. Bevorzugt werden Floatglasscheiben (3) und (5) der Standardstärken 2, 3, 4, 5, 6, 8, 10, 12, 15, 19 und 25 mm, beispielsweise 6 mm, verwendet.

Die Dicke der Schicht (4) aus einem partiell neutralisierten lonomerharz kann ebenfalls variieren. Vorzugsweise liegt sie bei 0,2 bis 15 mm. Bevorzugt sind Dicken von 0,3 bis 3 mm, insbesondere von 1 bis 2 mm, beispielsweise 1,52 mm. Beispielsweise wird die Schicht (4) aus einer Folie, die von der Firma DuPont unter der Marke SentryGlas Plus® vertrieben wird, hergestellt.

Als Klemmvorrichtung (6) wird beispielsweise eine Klemmvorrichtung der Firma Dorma verwendet, die der Befestigung einer Einscheibensicherheitsglasscheibe (ESG) in einer Glastüranlage dient. Die Klemmvorrichtungen (6) übt eine ständige Flächenpressung auf die Verbundsicherheitsglasscheibe (2) aus, die ausreicht, um die Verbundsicherheitsglasscheibe (2) in dem integrierten Glasaufbau (1) sicher zu befestigen.

Die Verbundsicherheitsglasscheibe (2) ist formstabil und weist nach der beidseitigen, längere Zeit andauernden, ständigen Druckbelastung oder Flächenpressung durch die Klemmvorrichtung (6) nach der Entlastung keine oder nur eine sehr geringe Verringerung ihrer Dicke gegenüber der Dicke vor der Belastung auf. Vorzugsweise zeigte sie nach einer ständigen Flächenpressung von 4,5 MPa während 72 Stunden und anschließender Entlastung an der belasteten Stelle eine Verringerung der Dicke <0,5%, bevorzugt <0,4%, besonders bevorzugt <0,3% und insbesondere <0,2% der ursprünglichen Dicke vor der Belastung.

### Beispiel und Vergleichsversuch

### Beispiel 1

### Die Herstellung einer Verbundsicherheitsglasscheibe A) des Aufbaus a1/a2/a3 und die Bestimmung ihrer Formstabilität

Es wurde eine Verbundsicherheitsglasscheibe A) in an sich bekannter Weise durch Verbinden einer Floatglasscheibe a1) einer Standardstärke von 6 mm, einer SentryGlas Plus®-Folie a2) der Firma DuPont der Dicke 1,52 mm (SGP) und einer Floatglasscheibe a3) einer Standardstärke von 6 mm hergestellt.

Die Formstabilität der Verbundsicherheitsglasscheibe A) wurde in folgender Weise durch Klemmversuche bestimmt.

Die Messpunkte 1 bis 5 (vgl. Tabelle 1) befanden sich längs der Kante der Verbundsicherheitsglasscheibe A) in einem Abstand von 1 cm von der Kante. Die Messpunkte 1 bis 5 waren jeweils 5 cm voneinander entfernt. Es wurde die jeweilige Dicke der Verbundsicherheitsglasscheibe A) an den Messpunkten 1 bis 5 gemessen (vgl. Tabelle 1: Messung vor 1. Belastung). Anschließend wurden an den Messpunkten 1 bis 5 Klemmen angebracht und mit einem Drehmomentschlüssel eine ständige Flächenpressung von jeweils 4,5 MPa eingestellt. Die Flächenpressung wurde während 72 Stunden aufrechterhalten. Anschließend wurden die Klemmen gelöst, und es wurde die jeweilige Dicke der Verbundsicherheitsglasscheibe A) an den Messpunkten 1 bis 5 gemessen (vgl. Tabelle 1: Messung nach 1. Belastung). Die Differenz zwischen den Dicken vor und nach der 1. Belastung wurde für jeden Messpunkt 1 bis 5 berechnet (vgl. Tabelle 1: Differenz zu Ursprung). Anschließend wurde die Verbundsicherheitsglasscheibe A) an den Messpunkten 1 bis 5 in gleicher Weise ein zweites Mal belastet, wonach die jeweilige Dicke an den Messpunkten 1 bis 5 ein zweites Mal gemessen wurde (vgl. Tabelle 1: Messung nach 2. Belastung). Hiernach wurde die Differenz zwischen den Dicken vor der 1. Belastung und nach der 2. Belastung berechnet (vgl. Tabelle 1: Differenz zu Ursprung).

**Tabelle 1: Bestimmung der Formstabilität durch Klemmversuche**

| ***Messpunkt Nr.*** | ***1*** | ***2*** | ***3*** | ***4*** | ***5*** | |
|---|---|---|---|---|---|---|
| Messung vor 1. Belastung | 13,239 | 13,373 | 13,458 | 13,483 | 13,470 | |
| Messung nach 1. Belastung | 13,231 | 13,358 | 13,458 | 13,477 | 13,452 | |
| Differenz zu Ursprung | -0,007 | -0,015 | 0,000 | -0,006 | -0,018 | |
| Messung nach 2. Belastung | 13,233 | 13,358 | 13,452 | 13,473 | 13,446 | |
| Differenz zu Ursprung | -0,005 | -0,015 | -0,006 | -0,010 | -0,024 | |

Die Versuchsergebnisse untermauerten die hohe Formstabilität der Verbundsicherheitsglasscheibe A): Die Verringerung der Dicke durch die Belastung war signifikant kleiner als 0,5% der ursprünglichen Dicke vor der Belastung. Die Verbundsicherheitsglasscheibe A) war daher hervorragend für die Herstellung eines Glasaufbaus geeignet, worin sie mithilfe von Klemmvorrichtungen B) alleine durch die ständige Flächenpressung dauerhaft befestigt werden konnte.

### Vergleichsversuch

### Die Herstellung einer Verbundsicherheitsglasscheibe des Aufbaus a1/PVB/a3 und die Bestimmung ihrer Formstabilität

Beispiel 1 wurde wiederholt, nur dass anstelle der SGP-Folie eine PolyvinylbutyralFolie (PVB) derselben Dicke verwendet wurde.

Die Bestimmung der Formstabilität der resultierenden Verbundsicherheitsglasscheibe erfolgte wie vorstehend beschrieben, nur dass die Klemmversuche an den Messpunkten V1 bis V12 durchgeführt wurden (vgl. Tabelle 2).

**Tabelle 2: Bestimmung der Formstabilität durch Klemmversuche**

| ***Messpunkt Nr.*** | ***V1*** | ***V2*** | ***V3*** | ***V4*** | ***V5*** | ***V6*** |
|---|---|---|---|---|---|---|
| Messung vor 1. Belastung | 13,092 | 13,099 | 13,128 | 13,163 | 13,180 | 13,150 |
| Messung nach 1. Belastung | 12,957 | 12,943 | 13,056 | 13,079 | 13,006 | 13,012 |
| Differenz zu Ursprung | -0,135 | -0,156 | -0,072 | -0,084 | -0,174 | -0,138 |
| Messung nach 2. Belastung | 12,955 | 12,870 | 13,039 | 13,071 | 12,951 | 12,994 |
| Differenz zu Ursprung | -0,137 | -0,229 | -0,089 | -0,092 | -0,229 | -0,156 |

| ***Messpunkt Nr*.** | ***V7*** | ***V8*** | ***V9*** | ***V10*** | ***V11*** | ***V12*** |
|---|---|---|---|---|---|---|
| Messung vor 1. Belastung | 13,333 | 13,339 | 13,345 | 13,329 | 13,290 | 13,212 |
| Messung nach 1. Belastung | 13,202 | 13,199 | 13,283 | 13,260 | 13,148 | 13,120 |
| Differenz zu Ursprung | -0,131 | -0,140 | -0,062 | -0,069 | -0,142 | -0,092 |
| Messung nach 2. Belastung | 13,182 | 13,153 | 13,269 | 13,237 | 13,077 | 13,072 |
| Differenz zu Ursprung | -0,151 | -0,186 | -0,076 | -0,092 | -0,213 | -0,140 |

Die Ergebnisse der Tabelle 2 untermauerten, dass die Verbundsicherheitsglasscheibe des Vergleichsversuchs eine signifikant geringere Formstabilität als die Verbundsicherheitsglasscheibe A) des Beispiels aufwies: Die Verringerung der Dicke durch die Belastung war signifikant größer als 0,5% der ursprünglichen Dicke vor der Belastung. Die Verbundsicherheitsglasscheibe des Vergleichsversuchs war daher nicht dazu geeignet alleine durch eine Flächenpressung durch Klemmvorrichtungen befestigt zu werden.

## Patentansprüche

1. Integrierter Glasaufbau, umfassend
A) eine bei der Belastung durch eine ständige Flächenpressung formstabile Verbundglasscheibe, enthaltend
a1) eine erste Glasscheibe,
a2) eine Schicht aus einem partiell neutralisierten lonomerharz, das Ethylen und/oder Propylen und mindestens eine alpha,beta-ungesättigte Carbonsäure mit 3 bis 8 Kohlenstoffatomen im Molekül einpolymerisiert enthält, und
a3) eine zweite Glasscheibe, sowie
B) mindestens eine Klemmvorrichtung, die von außen auf die Verbundglasscheibe A) beidseitig eine ständige Flächenpressung ausübt und die Verbundglasscheibe A) alleine durch die ständige Flächenpressung fixiert.

2. Integrierter Glasaufbau nach Anspruch 1, **dadurch gekennzeichnet, dass** das lonomerharz a2) ein wasserlösliches Natriumsalz eines Copolymerisats aus Ethylen und Methacrylsäure enthält.

3. Integrierter Glasaufbau nach Anspruch 1 oder 2, **dadurch gekennzeichnet, dass** die Glasscheiben a1) und a3) Floatglas oder teilvorgespanntes oder vorgespanntes Floatglas enthalten.

4. Integrierter Glasaufbau nach einem der Ansprüche 1 bis 3, **dadurch gekennzeichnet, dass** die Klemmvorrichtungen B) Klemmbeschläge enthalten.

5. Integrierter Glasaufbau nach einem der Ansprüche 1 bis 4, **dadurch gekennzeichnet, dass** die Klemmvorrichtung B) eine konstante Flächenpressung von bis zu 4,5 MPa, auf die Verbundglasscheibe A) ausübt.

6. Integrierter Glasaufbau nach einem der Ansprüche 1 bis 5, **dadurch gekennzeichnet, dass** er weitere Schichten umfasst.

7. Integrierter Glasaufbau nach einem der Ansprüche 1 bis 6, **dadurch gekennzeichnet, dass** er geformt, insbesondere in eine oder mehrere Raumrichtungen gewölbt, ist.

8. Integrierter Glasaufbau nach einem der Ansprüche 1 bis 7, **dadurch gekennzeichnet, dass** die Verbundglasscheibe A) nach einer ständigen Flächenpressung von 4,5 MPa während 72 Stunden und anschließender Entlastung an der belasteten Stelle eine Verringerung der Dicke <0,5% der ursprünglichen Dicke vor der Belastung aufweist.

9. Verfahren zur Herstellung integrierter Glasaufbauten gemäß einem der Ansprüche 1 bis 8, **dadurch gekennzeichnet, dass** man
(1) eine erste Glasscheibe a1), eine Schicht a2) aus einem partiell neutralisierten lonomerharz, das Ethylen und/oder Propylen und mindestens eine alpha,beta-ungesättigte Carbonsäure mit 3 bis 8 Kohlenstoffatomen im Molekül einpolymerisiert enthält, und eine zweite Glasscheibe a3) laminiert, so dass eine unter den Bedingungen der Flächenpressung formstabile Verbundglasscheibe A) resultiert, wonach
(2) die Verbundglasscheibe A) mit mindestens einer Klemmvorrichtung B) derart verbunden wird, dass die Verbundglasscheibe A) von der mindestens einen Klemmvorrichtung B) alleine durch eine ständige Flächenpressung gehalten wird.

10. Verwendung des integrierten Glasaufbaus gemäß einem der Ansprüche 1 bis 8 und/oder eines mithilfe des Verfahrensgemäß Anspruch 9 hergestellten integrierten Glasaufbaus zur Herstellung von statisch und/oder dynamisch belasteten Glaskonstruktionen.

11. Verwendung nach Anspruch 10, **dadurch gekennzeichnet, dass** die Glaskonstruktionen Überkopfverglasungen für Dächer, Glaswände, Fassaden oder Ganzglastüren sind.

12. Verwendung nach Anspruch 10 oder 11, **dadurch gekennzeichnet, dass** die Glaskonstruktionen einbruchshemmend sind.
